# EUROPÄISCHE PATENTANMELDUNG

(11) **EP 4 715 316 A1**
(43) Veröffentlichungstag der Anmeldung: **25.03.2026**
(21) Anmeldenummer: 25181252.5
(22) Anmeldetag: 06.06.2025
(51) Int. Cl.: F41G 3/06, F41G 3/14, F41G 3/32, F41G 5/08, F41H 13/00, G01S 7/40, G01S 7/497, G01S 13/42, B64C 39/02, F41G 5/26

(54) **GEGENMESSEINRICHTUNG ZUR BESTIMMUNG VON JUSTAGEFEHLERN, LASERWAFFENSYSTEM UND VERFAHREN ZUR KORREKTUR EINER JUSTAGE EINER LASERWAFFE**

(30) Priorität: 18.09.2024 DE 102024003013
(71) Anmelder: MBDA Deutschland GmbH, 86529 Schrobenhausen (DE)
(72) Erfinder: ZOZ, Jürgen, 86316 Friedberg (DE)
(74) Vertreter: Isarpatent

(57) **Zusammenfassung**

Die vorliegende Erfindung betrifft eine Gegenmesseinrichtung (1) zur Bestimmung von Justagefehlern einer Laserwaffe (7) umfasst eine Referenzeinrichtung (2), welche dazu ausgebildet ist, elektromagnetische Strahlung von einer vorbestimmten Richtung (Z) eintreffend zu detektieren und/oder zurück entgegengesetzt der vorbestimmten Richtung zu reflektieren, und/oder elektromagnetische Strahlung entgegengesetzt der vorbestimmten Richtung zu emittieren, eine Positionsbestimmungseinrichtung (3), welche dazu eingerichtet ist, eine aktuelle Position relativ zur Laserwaffe zu bestimmen, eine Kommunikationsschnittstelle (4) zur Kommunikation mit einer Empfangseinheit (6) über einen Datenlink (41), und eine Steuereinrichtung (5), welche mit der Referenzeinrichtung, der Positionsbestimmungseinrichtung und der Kommunikationsschnittstelle kommunikativ verbunden ist, und welche dazu eingerichtet ist, die aktuelle Position von der Positionsbestimmungseinrichtung auszulesen und entsprechende Messdaten zur aktuellen Position über den Datenlink zu der Empfangseinheit zu senden, wobei die Messvorrichtung als fliegende Plattform ausgebildet ist. Ferner betrifft die Erfindung eine Laserwaffensystem sowie ein Verfahren zur Korrektur einer Justage einer Laserwaffe.

## Beschreibung

### TECHNISCHES GEBIET DER ERFINDUNG

Die vorliegende Erfindung betrifft eine Gegenmesseinrichtung zur Bestimmung von Justagefehlern einer Laserwaffe, ein Laserwaffensystem sowie ein Verfahren zur Korrektur einer Justage einer Laserwaffe.

### HINTERGRUND DER ERFINDUNG

Um eine hohe Präzision oder Genauigkeit einer Laserwaffe zu erreichen, sollten optische Sichtlinien von Sensor- und Laserkanälen einer Laserwaffe und gegebenenfalls eines Radars in regelmäßigen Abständen oder nach Wartungsvorgängen oder Komponententausch zueinander justiert oder die Justierung überprüft werden. Dies betrifft insbesondere die Sichtlinie eines Hochenergie- oder Wirklasers, sowie, falls vorhanden, auch die Sichtlinie eines Beleuchtungslasers, eines Radars, einer Nachführung, welche eine Fein- und Grobnachführung bzw. einen Feintracker und einen Grobtracker enthalten kann, als auch eines Laserentfernungsmessers.

Eine ungenaue Ausrichtung der Sichtlinien kann zu Problemen beim Detektieren und Tracken des Zieles und/oder zu deutlich längeren Bekämpfungszeiten führen. Je nach dem Aufbau und der Architektur der Laserwaffe ist es vorteilhaft, die Justage-Werte abhängig von der Zielentfernung bzw. von der Stellung des Turmes zu ermitteln.

Typischerweise kann zumindest ein Teil der Justagen über entsprechende Messvorrichtungen innerhalb der Laserwaffe erfolgen. Allerdings benötigen diese Messvorrichtungen Bauraum in der Laserwaffe. Außerdem wird dadurch die optische Auslegung der Laserwaffe deutlich komplexer, was die Zuverlässigkeit der Laserwaffe reduziert. Des Weiteren können nicht alle notwendigen Justage-Messungen mit internen Messvorrichtungen durchgeführt werden.

Alternativ können stationäre Messvorrichtungen genutzt werden. Diese sind aber typischerweise nicht in der Lage, entfernungs- oder turmstellungsabhängige Messungen durchzuführen. Daher sind Verfahren zur Justage einer Laserwaffe mit stationären Gegenmessstellungen und mit laserwaffeninternen Messvorrichtungen bekannt. So wird die Laserwaffe typischerweise innerhalb der Laserwaffe und/oder über eine gegebene Entfernung und Richtung des Richtturms justiert.

Es ist Aufgabe der vorliegenden Erfindung, eine Messvorrichtung bereitzustellen, die es ermöglicht, eine Justage einer Laserwaffe entfernungs- und richtungsabhängig zu korrigieren.

### ZUSAMMENFASSUNG DER ERFINDUNG

Erfindungsgemäß wird diese Aufgabe jeweils durch die Gegenstände der unabhängigen Ansprüche gelöst.

Gemäß einem ersten Aspekt der Erfindung ist eine Gegenmesseinrichtung zur Bestimmung von Justagefehlern einer Laserwaffe vorgesehen. Die Gegenmesseinrichtung zur Bestimmung von Justagefehlern einer Laserwaffe umfasst eine Referenzeinrichtung, welche dazu ausgebildet ist, elektromagnetische Strahlung von einer vorbestimmten Richtung eintreffend zu detektieren und/oder zurück entgegengesetzt der vorbestimmten Richtung zu reflektieren, und/oder elektromagnetische Strahlung entgegengesetzt der vorbestimmten Richtung zu emittieren, eine Positionsbestimmungseinrichtung, welche dazu eingerichtet ist, eine aktuelle Position relativ zur Laserwaffe zu bestimmen, eine Kommunikationsschnittstelle zur Kommunikation mit einer Empfangseinheit über einen Datenlink, und eine Steuereinrichtung, welche mit der Referenzeinrichtung, der Positionsbestimmungseinrichtung und der Kommunikationsschnittstelle kommunikativ verbunden ist, und welche dazu eingerichtet ist, die aktuelle Position von der Positionsbestimmungseinrichtung auszulesen und entsprechende Messdaten zur aktuellen Position über den Datenlink zu der Empfangseinheit zu senden, wobei die Gegenmesseinrichtung als fliegende Plattform ausgebildet ist.

Gemäß einem zweiten Aspekt der Erfindung ist ein Laserwaffensystem vorgesehen. Das Laserwaffensystem umfasst eine Laserwaffe, wobei die Laserwaffe insbesondere umfasst: eine Wirklasereinrichtung zur Emission eines Wirklaserstrahls, eine Beleuchtungslasereinrichtung zur Emission eines Beleuchtungslaserstrahls, ein optisches System, welches dazu eingerichtet ist, den Wirklaserstrahl und den Beleuchtungslaserstrahl aufzunehmen, zu überlagern zu fokussieren und durch eine Apertur zu emittieren, eine Nachführungseinrichtung, welche dazu ausgebildet ist, das optische System auf eine vorbestimmte Richtung zu richten, ein Radarsystem, welches dazu ausgelegt ist, durch Aussendung und Empfangen von Radarwellen mögliche Ziele zu detektieren und deren Position relativ zu Laserwaffe zu bestimmen, eine Entfernungsmesseinrichtung, welche dazu ausgebildet ist, eine Entfernung zu einem Ziel in der vorbestimmten Richtung zu bestimmen, eine Sensoreinrichtung, welche dazu ausgebildet ist, aus der vorbestimmten Richtung eintreffende elektromagnetische Strahlung zu detektieren, eine erfindungsgemäße Gegenmesseinrichtung zur Bestimmung von Justagefehlern, eine Empfangseinheit, welche kommunikativ mit der Kommunikationsschnittstelle der Gegenmesseinrichtung verbunden ist, wobei die Empfangseinheit mit der Laserwaffe kommunikativ verbunden ist und dazu ausgebildet ist, die von der Gegenmesseinrichtung gesendeten Messdaten zu empfangen, mit einer Steuerungseinrichtung, welche dazu eingerichtet ist, die Nachführungseinrichtung anzusteuern, um den Wirklaserstrahl und den Beleuchtungslaserstrahl auf ein Ziel in der vorbestimmten Richtung zu richten und basierend auf den Messdaten eine Justage der Laserwaffe zu korrigieren.

Gemäß einem dritten Aspekt der Erfindung ist ein Verfahren zur Korrektur einer Justage einer Laserwaffe vorgesehen. Das Verfahren zur Korrektur einer Justage einer Laserwaffe umfasst: Emittieren eines ersten Signals in eine vorbestimmte Richtung zu einer Gegenmesseinrichtung zur Bestimmung von Justagefehlern einer Laserwaffe, wobei die Gegenmesseinrichtung als fliegende Plattform ausgebildet ist, Empfangen eines ersten Antwortsignals aus der vorbestimmten Richtung, Ermitteln einer Referenzposition der Gegenmesseinrichtung, Bestimmen einer ersten Messposition aus dem ersten Antwortsignal, und Bestimmen eines ersten Justagefehlers einer ersten Komponente der Laserwaffe auf Basis einer Differenz der Referenzposition und der ersten Messposition, wobei der Justagefehler einen Azimut- und Elevationswinkels beinhaltet.

Eine der vorliegenden Erfindung zugrunde liegende Idee besteht darin, eine Gegenmesseinrichtung als fliegende Plattform, beispielsweise einer Drohne auszubilden. Die Gegenmesseinrichtung weist eine oder mehrere Sensoren oder Sende-Elemente auf, welche es der Laserwaffe ermöglichen, in einem Justagemodus die Justage seiner einzelnen Komponenten zu korrigieren. Durch die Ausbildung als mobile Plattform, beispielsweise als Drohne, ist es einfach möglich, dass die Gegenmesseinrichtung seine Richtung und Entfernung zur Laserwaffe zu verändern.

Auf diese Weise ist es möglich, die Justage aller Kanäle mit einer externen Gegenmessstelle zu korrigieren. Kanäle stellen dabei Abhängigkeiten von der Justage von einer Komponente der Laserwaffe zur Justage einer zweiten Komponente der Laserwaffe dar, wie weiter unten beschrieben wird. Ferner können entfernungs- und turmstellungsabhängigen Messungen durchgeführt werden. Dies kann sowohl im Feld als auch im Einsatz geschehen. Die als fliegende Plattform ausgebildete Gegenmesseinrichtung besitzt weiterhin den Vorteil einer daraus resultierenden reduzierten Komplexität der Laserwaffe, da an dieser nur eine Justage an der Laserwaffe selbst vorgenommen werden muss. Die vorbestimmte Richtung ist grundsätzlich definiert als die Richtung von der Laserwaffe zu der Gegenmesseinrichtung.

So führt das die Gegenmesseinrichtung zur Justage der Laserwaffe zu geringeren Kosten als eine Laserwaffe auf, in welcher ein entsprechendes System integriert wäre, da ein einfacheres optisches System ermöglicht wird, welches keine internen autonomen Justagemesseinrichtungen mehr benötigt. Außerdem kann die als fliegende Plattform ausgebildete Gegenmesseinrichtung für beliebig viele Laserwaffen zur Justage genutzt werden. Durch die Gegenmesseinrichtung der vorliegenden Erfindung gibt es auch keine Reduktion der Zuverlässigkeit der Laserwaffe aufgrund von zusätzlichen Bauteilen zur Vermessung und Justage der Laserwaffe. Ferner ist die Gegenmesseinrichtung auch auf Schiffen einfach einsetzbar.

Vorteilhafte Ausführungsformen und Weiterbildungen ergeben sich aus den auf die unabhängigen Ansprüche rückbezogenen Unteransprüchen sowie aus der Beschreibung unter Bezugnahme auf die Figuren.

Gemäß einer Ausführungsform der Gegenmesseinrichtung weist die Referenzeinrichtung eine optische Flächensensoreinrichtung auf. Die Flächensensoreinrichtung weist einen Flächendetektor auf und ist dazu ausgebildet, eine Intensitätsverteilung der auf den Flächendetektor auftreffenden optischen Strahlung zu detektieren. Die optischen Strahlung ist insbesondere die eines Wirklasers. Ferner ist die Steuereinrichtung in dieser Ausführungsform dazu ausgebildet, die detektierte Intensitätsverteilung und/oder daraus berechnete Größen über den Datenlink an die Empfangseinheit zu senden. Auf diese Weise kann Strahlung eines Wirklaserstrahl direkt an der Gegenmesseinrichtung detektiert werden. Anhand der detektierten Intensitätsverteilung kann ein Schwerpunkt berechnet werden, der der Position des jeweiligen Laserspots entspricht. Daraus können Information einer eventuellen Abweichung des Wirklasers gewonnen, und über die Empfangseinheit an die Laserwaffe kommuniziert werden, damit die entsprechenden Lasereinrichtungen nachjustiert werden. Ferner kann aus der Intensitätsverteilung auch ein Strahldurchmesser berechnet werden, wodurch Informationen über den Fokus des Wirklasers gewonnen werden können. Auch diese Informationen können über die Empfangseinheit an die Laserwaffe übermittelt werden, um die entsprechenden Lasereinrichtungen in ihrem Fokus nachzujustieren.

Gemäß einer weiteren Ausführungsform der Gegenmesseinrichtung weist die Referenzeinrichtung einen Retroreflektor für Radarwellen auf. Der Retroreflektor ist dazu geeignet, von der vorbestimmten Richtung auftreffenden Radarwellen entgegengesetzt der vorbestimmten Richtung, insbesondere mit hoher Reflexion, zurück zu reflektieren. Hiermit ist es möglich, ein Radarsystem einer Laserwaffe auszurichten, indem von diesem ein Signal gesendet und durch den Retroreflektor wieder an dieses zurückgesendet wird. Durch Vergleich der von dem Radarsystem gemessenen und der aktuellen Position, welche die Positionsbestimmungseinrichtung erfasst hat, beispielsweise von GPS-Daten, kann eine Justage des Radarsystems vorgenommen werden. Eine hohe Reflexion bedeutet hierbei, dass mehr als 50% der auf den Retroreflektor eintreffenden Strahlung wieder entgegengesetzt der vorbestimmten Richtung zurück reflektiert werden.

Gemäß einer Ausführungsform der Gegenmesseinrichtung weist die Referenzeinrichtung eine Mehrzahl von Lichtquellen aufweist, welche dazu ausgebildet sind, Leuchtsignale in unterschiedlichen spektralen Bereichen auszusenden. Die unterschiedlichen spektralen Bereiche sind zur Detektion bildgebender Sensoreinrichtungen der Laserwaffe ausgewählt. Bevorzugt umfassen die spektralen Bereiche den sichtbaren Bereich, sowie den nahen und mittleren Infrarot-Bereich. Auf diese Weise können optische Signale in einem breiten Spektralbereich zur Justage in Richtung der Laserwaffe gesendet werden, was eine Justage auf besonders vielfältige Art und Weise ermöglicht.

Gemäß einer weiteren Ausführungsform der Gegenmesseinrichtung weist die Referenzeinrichtung eine erste Lichtquelle auf. Die erste Lichtquelle ist dazu ausgebildet, ein erstes Leuchtsignal in einem ersten spektralen Bereich, entgegengesetzt der vorbestimmten Richtung zu emittieren. Vorzugsweise enthält der erste Spektralbereich den Infrarotbereich des elektromagnetischen Spektrums.

Diese Wellenlänge ist insbesondere zur Detektion mit einer entsprechenden Kamera geeignet, die vorzugsweise für eine Grobnachführung eines Wirklasers einer Laserwaffe verwendet wird. Hiermit lässt sich also ein Signal für die Grobnachführung zur Korrektur einer Justage erzeugen.

Gemäß einer weiteren Ausführungsform der Gegenmesseinrichtung weist die Referenzeinrichtung eine zweite Lichtquelle auf. Die zweite Lichtquelle ist dazu ausgebildet, ein zweites Leuchtsignal in einem von dem ersten spektralen Bereich verschiedenen zweiten spektralen Bereich entgegengesetzt der vorbestimmten Richtung zu emittieren. Vorzugsweise enthält der zweite Spektralbereich den sichtbaren Bereich oder den nahen Infrarotbereich des elektromagnetischen Spektrum. Diese Wellenlängen sind insbesondere zur Detektion mit einer entsprechenden Kamera geeignet, die vorzugsweise für eine Feinnachführung eines Wirklasers einer Laserwaffe verwendet wird. Hiermit lässt sich also ein Signal für die Feinnachführung zur Korrektur einer Justage erzeugen.

Gemäß einer weiteren Ausführungsform der Gegenmesseinrichtung weist die Referenzeinrichtung einer für einen dritten Spektralbereich sensitiven Fotodetektoreinrichtung auf. Insbesondere verfügt die Fotodetektoreinrichtung über einen in dem dritten Spektralbereich sensitiven ersten Fotodetektor. Die Steuereinrichtung ist dazu ausgebildet, von der Fotodetektoreinrichtung ausgegebene dritte Signalwerte über den Datenlink an die Empfangseinheit zu senden. Die Steuereinrichtung kann insbesondere eine Auswerteeinheit aufweisen, welche dazu ausgebildet ist, zumindest einen Strahlparameter aus einer Mehrzahl von dritten Signalwerten in Abhängigkeit der aktuellen Position zu ermitteln. In diesem Fall ist die Steuereinrichtung ferner dazu ausgebildet, den zumindest einen Strahlparameter mittels des Datenlinks zur Empfangseinheit zu senden. Auf diese Weise kann eine Auswerteeinheit, welche sich an Bord der Gegenmesseinrichtung, beispielsweise in der Steuereinheit, oder der Empfangseinheit befindet, die dritten Intensitätswerte auf einen Strahlparameter, wie beispielsweise einem Durchmesser und/oder Position eines Lichtkegels der Strahlung, auswerten. Diese Strahlung im dritten Spektralbereich kann beispielsweise von einem Beleuchtungslaser einer Beleuchtungslasereinrichtung oder von einem Entfernungsmesslaser einer Entfernungsmesseinrichtung emittiert worden sein. Auf dieser Basis kann die Ausrichtung des Beleuchtungslasers, beispielsweise über einen Richtturm oder einer Nachführungseinrichtung, oder des Entfernungsmesslasers nachjustiert werden.

Gemäß einer weiteren Ausführungsform der Gegenmesseinrichtung ist die Positionsbestimmungseinrichtung dazu ausgebildet, die aktuelle Position aus einem GPS-Signal zu ermitteln, welches von der Positionsbestimmungseinrichtung empfangen wird. Dies stellt eine relativ einfach und zuverlässige Weise dar, die aktuelle Position zu bestimmen. Mit einem GPS (Gobal Positioning System)-Signal sind alle Arten von globalen Positioniersystemen, welche über im Erdorbit positionierte Satelliten verfügen, anwendbar. Alternativ oder zusätzlich kann die aktuelle Position auch über eine intern gespeicherte Karte bestimmt werden, die mit der von einer Kamera erfassten Umgebung abgeglichen wird. Weitere Verfahren für die Ermittlung der aktuellen Position sind denkbar.

Gemäß einer Ausführungsform des Verfahrens beinhaltet die Referenzposition eine Richtungsangabe der Gegenmesseinrichtung und eine Entfernungsangabe der Gegenmesseinrichtung von der Laserwaffe, welche das erste Signal emittiert. Aus diesen Angaben lässt sich die Referenzposition genau bestimmen, um diese später für die Justage der verschiedenen Kanäle und Komponenten zu verwenden.

Gemäß einer weiteren Ausführungsform des Verfahrens wird die Referenzposition aus einem GPS-Signal der Gegenmesseinrichtung herausgelesen. Die Referenzposition wird dann an eine Empfangseinheit, welche kommunikativ mit der Laserwaffe verbunden ist, übermittelt. Wie weiter oben in Bezug auf die Gegenmesseinrichtung beschrieben, stellt dies eine relativ einfach und zuverlässige Weise dar, die aktuelle Position zu bestimmen. Mit einem GPS (Gobal Positioning System)-Signal sind alle Arten von globalen Positioniersystemen, welche über im Erdorbit positionierte Satelliten verfügen, anwendbar. Alternativ oder zusätzlich kann die aktuelle Position auch über eine intern gespeicherte Karte bestimmt werden, die mit der von einer Kamera erfassten Umgebung abgeglichen wird. Weitere Verfahren für die Ermittlung der aktuellen Position sind denkbar.

Gemäß einer weiteren Ausführungsform des Verfahrens ist das erste Signal ein Radarsignal und die erste Komponente eine Ausrichtungseinrichtung eines Radarsystems. Die Gegenmesseinrichtung weist außerdem einen Retroreflektor auf, welcher das auf die Gegenmesseinrichtung auftreffende erste Signal als erstes Antwortsignal zurück zu einem Emitter des ersten Signals sendet. Somit kann das Radarsystem nach der Referenzposition nachjustiert werden.

Gemäß einer weiteren Ausführungsform umfasst das Verfahren ferner ein Empfangen eines ersten Leuchtsignals eines ersten Spektralbereichs von der Gegenmesseinrichtung mit einer ersten Kamera einer Nachführungseinrichtung. Außerdem umfasst das Verfahren ein Bestimmen einer zweiten Messposition der Gegenmesseinrichtung auf Basis eines von der ersten Kamera aufgenommenen Bildes des ersten Leuchtsignals, und ein Bestimmen eines Justagefehlers der Nachführungseinrichtung auf Basis einer Differenz der zweiten Messposition und der ersten Messposition. Diese Justage betrifft einen ersten Kanal, welche durch das Radarsystem als Referenz zu der Nachführungseinrichtung, die in diesem Fall eine Grobnachführungseinrichtung des Wirklasers sein kann, vorgenommen wird.

Gemäß einer weiteren Ausführungsform umfasst das Verfahren ferner ein Empfangen eines zweiten Leuchtsignals eines zweiten Spektralbereichs von der Gegenmesseinrichtung mit einer zweiten Kamera einer Feinnachführungseinrichtung. Außerdem umfasst das Verfahren ein Bestimmen einer dritten Messposition der Gegenmesseinrichtung auf Basis eines von der zweiten Kamera aufgenommenen Bildes des zweiten Leuchtsignals, sowie ein Bestimmen eines Justagefehlers der Feinnachführungseinrichtung auf Basis einer Differenz der dritten Messposition und der zweiten Messposition. Diese Justage betrifft einen zweiten Kanal, welche durch die Nachführungseinrichtung, die in diesem Fall eine Grobnachführungseinrichtung des Wirklasers sein kann, als Referenz zu der Feinnachführungseinrichtung des Wirklasers vorgenommen wird.

Gemäß einer weiteren Ausführungsform umfasst das Verfahren ferner ein Emittieren eines von einer Wirklasereinrichtung ausgegebenen Wirklaserstrahls in Richtung der Gegenmesseinrichtung, ein Detektieren einer ersten Intensitätsverteilung des Wirklaserstrahls mit einer optischen Flächensensoreinrichtung auf der Gegenmesseinrichtung, sowie ein Ermitteln eines ersten Schwerpunkts der ersten Intensitätsverteilung des Wirklasers auf Basis der detektierten ersten Intensitätsverteilung. Außerdem umfasst das Verfahren ein Bestimmen einer vierten Messposition der Gegenmesseinrichtung auf Basis des ermittelten ersten Schwerpunkts der ersten Intensitätsverteilung, sowie ein Bestimmen eines Justagefehlers der Wirklasereinrichtung auf Basis einer Differenz der vierten Messposition und der dritten Messposition. Diese Justage betrifft einen dritten Kanal, welcher durch die Feinnachführungseinrichtung als Referenz zu der den Wirklaser enthaltenden Wirklasereinrichtung vorgenommen wird.

Gemäß einer weiteren Ausführungsform umfasst das Verfahren ferner ein Verändern einer Fokusposition des Wirklaserstrahls, sowie ein Ermitteln von zweiten Intensitätsverteilungen für verschiedene Fokuspositionen mit der optischen Flächensensoreinrichtung auf der Gegenmesseinrichtung. Das Verändern der Fokusposition des Wirklasers kann beispielsweise durch Variation der Position einer Linse oder eines Spiegels im Strahlengang des Wirklasers innerhalb der Laserwaffe auf der optischen Achse geschehen. Eine weitere Möglichkeit besteht durch eine Veränderung einer Krümmung eines deformierbaren Spiegels im Strahlengang des Wirklasers. Außerdem umfasst das Verfahren ein Ermitteln eines Durchmessers eines Wirklaserstrahlspots auf Basis der erfassten zweiten Intensitätsverteilung in Abhängigkeit der Modulation der Fokusposition, sowie ein Bestimmen eines Justagefehlers eines Fokus des Wirklaserstrahls auf Basis des bestimmten Durchmessers des Wirklaserstrahlspots. In diesem vierten Justagekanal wird somit der Fokus des Wirklasers justiert.

Gemäß einer weiteren Ausführungsform umfasst das Verfahren ferner ein Emittieren eines von einer Beleuchtungslasereinrichtung ausgegebenen Beleuchtungslaserstrahls in unterschiedliche Winkel innerhalb eines vorgegebenen Raumwinkels um die vorbestimmte Richtung, welche auf die Gegenmesseinrichtung zeigt, ein Detektieren eines optischen Signals des Beleuchtungslaserstrahls mit einer Fotodetektoreinrichtung auf der Gegenmesseinrichtung. Insbesondere enthält die Fotodetektoreinrichtung einen ersten Fotodetektor zur Detektion der Strahlung des Beleuchtungslasers. Außerdem umfasst das Verfahren ein Ermitteln einer dritten Intensitätsverteilung auf Basis der vom Fotodetektoreinrichtung ausgelesenen ermittelten Signalstärke und dem Raumwinkel, sowie ein Bestimmen eines Justagefehlers der Beleuchtungslasereinrichtung auf Basis der dritten Intensitätsverteilung. Dieser weitere Kanal betrifft die Justage des Beleuchtungslasers, welcher auf die Gegenmesseinrichtung gerichtet wird. Der Beleuchtungslaser hat eine deutlich geringere Leistung und größeren Strahldurchmesser, an der Gegenmesseinrichtung als der Wirklaser.

Gemäß einer weiteren Ausführungsform umfasst das Verfahren ferner ein Emittieren eines von einer Entfernungsmesseinrichtung ausgegeben Entfernungsmesslaserstrahls in unterschiedliche Winkel innerhalb eines vorbestimmten Raumwinkels um die vorbestimmte Richtung, welche auf die Gegenmesseinrichtung zeigt, sowie ein Detektieren eines optischen Signals des Entfernungsmesslaserstrahls mit einer Fotodetektoreinrichtung auf der Gegenmesseinrichtung. Insbesondere enthält die Fotodetektoreinrichtung einen zweiten Fotodetektor zur Detektion der Strahlung des Entfernungsmesslasers. Außerdem umfasst das Verfahren ein Ermitteln einer vierten Intensitätsverteilung auf Basis der von der Fotodetektoreinrichtung ausgelesenen ermittelten Signalstärke und dem Raumwinkel, sowie ein Bestimmen eines Justagefehlers der Entfernungsmesseinrichtung auf Basis der ermittelten vierten Intensitätsverteilung. Wie oben bereits beschreiben, kann auf diese Weise eine mit der Steuereinheit oder der Empfangseinheit verbundene Auswerteeinheit die Intensitätswerte auf einen Durchmesser eines Lichtkegels der Strahlung, welche von einem Entfernungsmesslaser eines Entfernungsmesseinrichtung emittiert wurde. Auf dieser Basis kann die Ausrichtung eines Entfernungsmesslaser der Entfernungsmesseinrichtung nachjustiert werden.

Gemäß einer weiteren Ausführungsform umfasst das Verfahren ferner ein Steuern der Gegenmesseinrichtung auf einer vorbestimmten Flugbahn, auf welcher die Gegenmesseinrichtung zu der Laserwaffe, welche das erste Signal emittiert, unterschiedliche Entfernungen aufweist, und auf welcher die Gegenmesseinrichtung mit der Laserwaffe unterschiedliche Azimutalwinkel und Elevationswinkel aufspannt. Auf diese Weise kann die Laserwaffe auf unterschiedliche Entfernungen und in unterschiedlicher Ausrichtungen, beispielsweise eines Richtturms, justiert werden, wodurch sich die Zielgenauigkeit der Laserwaffe erhöht.

Die obigen Ausführungsformen und Weiterbildungen lassen sich, sofern sinnvoll, beliebig miteinander kombinieren. Insbesondere lassen sich die Ausführungsformen der Gegenmesseinrichtung mit den Ausführungsformen des Verfahrens kombinieren, und umgekehrt. Weitere mögliche Ausführungsformen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: eine schematische Darstellung einer Gegenmesseinrichtung zur Bestimmung von Justagefehlern gemäß einem Ausführungsbeispiel der Erfindung;
- Fig. 2: eine schematische Darstellung einer Gegenmesseinrichtung gemäß einem weiteren Ausführungsbeispiel der Erfindung;
- Fig. 3: eine schematische Darstellung eines Laserwaffensystems gemäß einem Ausführungsbeispiel der Erfindung;
- Fig. 4: eine schematische Darstellung eines Verfahrens zur Korrektur einer Justage einer Laserwaffe gemäß einem Ausführungsbeispiel der Erfindung; und
- Fig. 5: eine schematisches Darstellung eines Verfahrens zur Korrektur einer Justage einer Laserwaffe gemäß einem weiteren Ausführungsbeispiel der Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

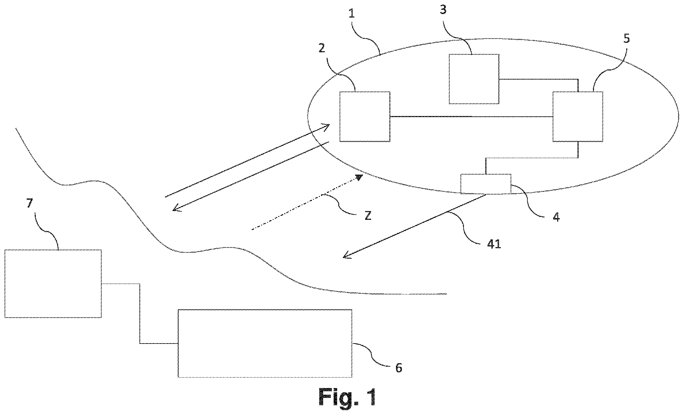

Fig. 1 zeigt eine schematische Darstellung einer Gegenmesseinrichtung 1 zur Bestimmung von Justagefehlern gemäß einem Ausführungsbeispiel der Erfindung.

Die Gegenmesseinrichtung 1 zur Bestimmung von Justagefehlern einer Laserwaffe 7 umfasst eine Referenzeinrichtung 2, welche dazu ausgebildet ist, elektromagnetische Strahlung von einer vorbestimmten Richtung Z eintreffend zu detektieren und/oder zurück entgegengesetzt der vorbestimmten Richtung Z zu reflektieren. Alternativ oder zusätzlich kann die Referenzeinrichtung 2 dazu ausgebildet sein, elektromagnetische Strahlung entgegengesetzt der vorbestimmten Richtung Z zu emittieren.

Die Gegenmesseinrichtung 1 enthält außerdem ein Positionsbestimmungseinrichtung 3, welche dazu eingerichtet ist, eine aktuelle Position relativ zur Laserwaffe zu bestimmen.

Die Gegenmesseinrichtung 1 weist ferner eine Kommunikationsschnittstelle 4 zur Kommunikation mit einer Empfangseinheit 6 über einen Datenlink 41 auf

Weiterhin weist die die Gegenmesseinrichtung 1 eine Steuereinrichtung 5 auf. Die Steuereinrichtung ist mit der Referenzeinrichtung 2, der Positionsbestimmungseinrichtung und der Kommunikationsschnittstelle 4 kommunikativ verbunden. Die Steuereinrichtung 5 ist dazu eingerichtet, die aktuelle Position von der Positionsbestimmungseinrichtung 3 auszulesen und entsprechende Messdaten zur aktuellen Position über den Datenlink 41 zu der Empfangseinheit 6 zu senden. Die Messdaten enthalten somit Informationen über die aktuelle Position der Gegenmesseinrichtung 1, insbesondere der aktuellen Position der Gegenmesseinrichtung 1 relativ zu einer Laserwaffe 7.

Es ist in Fig. 1 zu erkennen, dass die Gegenmesseinrichtung 1 als fliegende Plattform ausgebildet ist. In einigen Ausführungsbeispielen ist die Gegenmesseinrichtung 1 als mobile Plattform ausgebildet.

In Fig. 1 ist weiterhin eine Empfangseinheit 6 und eine mit der Empfangseinheit 6 kommunikativ verbundene Laserwaffe 7 zu erkennen, die sich von der Gegenmesseinrichtung 1 aus gesehen in der vorbestimmten Richtung Z befinden. Die vorbestimmte Richtung Z ist hier also definiert als die Richtung von einer Laserwaffe 7 zu der Gegenmesseinrichtung 1.

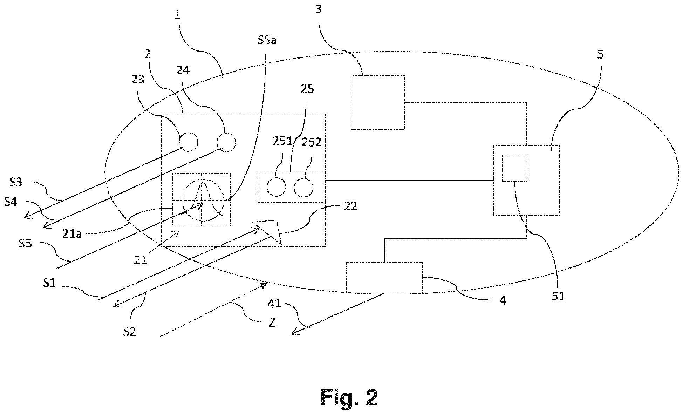

Fig. 2 zeigt eine schematische Darstellung einer Gegenmesseinrichtung 1 gemäß einem weiteren Ausführungsbeispiel der Erfindung.

Das Ausführungsbeispiel der Fig. 2 basiert auf dem in Fig. 1 gezeigten Ausführungsbeispiel der Gegenmesseinrichtung 1 und ist mit dieser kombinierbar.

Die Referenzeinrichtung 2 in diesem Ausführungsbeispiel weist eine optische Flächensensoreinrichtung 21 auf. Die Flächensensoreinrichtung 21 weist einen Flächendetektor 21a auf, welcher beispielsweise ein Array von optischen Detektoren, oder eine CCD, CMOS- oder andere geeignete Kamera mit einer Vielzahl von Bildelementen sein kann. Die Flächensensoreinrichtung 21 ist dazu ausgebildet, eine Intensitätsverteilung der auf einen Flächendetektor 21a auftreffenden optischen Strahlung zu detektieren. Aus der Intensitätsverteilung lassen sich unterschiedliche Größen berechnen, wie beispielsweise einen Strahldurchmesser oder einen Schwerpunkt der Intensitätsverteilung. Die Steuereinrichtung 5 ist dazu ausgebildet, die detektierte Intensitätsverteilung und/oder die daraus berechnete Größen über den Datenlink 41 an die Empfangseinheit 6 zu senden.

In weiteren Ausführungsform ist die optische Flächensensoreinrichtung 21 ferner dazu eingerichtet, die Intensitätsverteilung von Strahlung aus zumindest zwei unterschiedlichen Spektralbereichen getrennt voneinander zu bestimmen. In weiteren Ausführungsbeispielen ist die Flächensensoreinrichtung 21 dazu ausgebildet, Intensitätsverteilungen von Strahlung aus drei oder mehr unterschiedlichen Spektralbereichen getrennt voneinander zu bestimmen. Dies kann beispielsweise durch eine entsprechende Anzahl von Flächendetektoren 21a realisiert werden, die vorteilhafterweise einen für den jeweiligen Spektralbereich geeigneten Bandpassfilter für der Detektorfläche aufweisen, so dass nur Strahlung von dem jeweiligen Spektralbereich auf die Detektorfläche eintrifft.

Die in Fig. 2 gezeigte Referenzeinrichtung 2 weist ferner einen Retroreflektor 22 für Radarwellen auf. Der Retroreflektor 22 ist dazu geeignet, von der vorbestimmten Richtung Z auftreffenden Radarwellen entgegengesetzt der vorbestimmten Richtung Z zurück zu reflektieren.

Die Referenzeinrichtung 2 weist eine Mehrzahl von Lichtquellen 23, 24 auf, welche dazu ausgebildet sind, Leuchtsignale S3, S4 in unterschiedlichen spektralen Bereichen auszusenden. In bevorzugten Ausführungsbeispielen sind die unterschiedlichen spektralen Bereiche zur Detektion bildgebender Sensoreinrichtungen der Laserwaffe 7 ausgewählt. In weiteren bevorzugten Ausführungsbeispielen umfassen die spektralen Bereich den sichtbaren Bereich, sowie den nahen und mittleren Infrarot-Bereich.

In dem vorliegenden Ausführungsbeispiel weist die Referenzeinrichtung 2 eine erste Lichtquelle 23 auf. Die erste Lichtquelle 23 ist dazu ausgebildet, ein erstes Leuchtsignal S3 in einem ersten, vorzugsweise infraroten, spektralen Bereich, entgegengesetzt der vorbestimmten Richtung Z zu emittieren. Die Referenzeinrichtung 2 weist außerdem eine zweite Lichtquelle 24 auf. Die zweite Lichtquelle 24 ist dazu ausgebildet, ein zweites Leuchtsignal S4 in einem von dem ersten spektralen Bereich verschiedenen zweiten, vorzugsweise sichtbaren oder nahem Infrarot, spektralen Bereich, entgegengesetzt der vorbestimmten Richtung Z zu emittieren. Die erste und zweite Lichtquellen 23, 24 können dabei als Laserdioden mit einer Emission im entsprechendem Spektralbereich ausgebildet sein. Die erste und zweite Leuchtquelle 23, 24 dienen dabei als Signalgeber für die Laserwaffe 7, wie weiter unten beschrieben wird.

Die Referenzeinrichtung 2 weist ferner eine für einen dritten Spektralbereich sensitiven Fotodetektoreinrichtung 25 auf. Die Steuereinrichtung 5 ist dazu ausgebildet, von der Fotodetektoreinrichtung 25 ausgegebene dritte Signalwerte über den Datenlink 41 an die Empfangseinheit 6 zu senden. In weiteren Ausführungsbeispielen weist die Steuereinrichtung 5 eine Auswerteeinheit 51 auf, welche dazu ausgebildet ist, zumindest einen Strahlparameter aus einer Mehrzahl von dritten Signalwerten in Abhängigkeit der aktuellen Position zu ermitteln und den zumindest einen Strahlparameter mittels des Datenlinks 41 zur Empfangseinheit 6 zu senden. In bevorzugten Ausführungsformen werden die Strahlparameter über eine Bewegung eines Richtturms, beispielsweise einer Nachführungseinrichtung 74, bestimmt bzw. ermittelt.

In der in Fig. 2 gezeigten Ausführungsform weist die Fotodetektoreinrichtung 25 einen ersten Fotodetektor 251 auf, welcher zur Detektion eines von der Laserwaffe 7 emittierten Beleuchtungslaserstrahls S6 vorgesehen ist. Ferner weit die Fotodetektoreinrichtung 25 einen zweiten Fotodetektor 252 auf, welcher zur Detektion eines von der Laserwaffe 7 emittierten Entfernungsmesslaserstrahls S7 vorgesehen ist

In diesem Ausführungsbeispiel ist die Positionsbestimmungseinrichtung 3 dazu ausgebildet, die aktuelle Position aus einem GPS-Signal zu ermitteln, welches von der Positionsbestimmungseinrichtung 3 empfangen wird. Mit einem GPS (Gobal Positioning System)-Signal sind alle Arten von globalen Positioniersystemen, welche über im Weltall positionierte Satelliten aufgebaut ist, anwendbar. Alternativ oder zusätzlich kann die aktuelle Position auch über eine intern gespeicherte Karte bestimmt werden, die mit der von einer Kamera erfassten Umgebung abgeglichen wird. Weitere Verfahren für die Ermittlung der aktuellen Position sind denkbar.

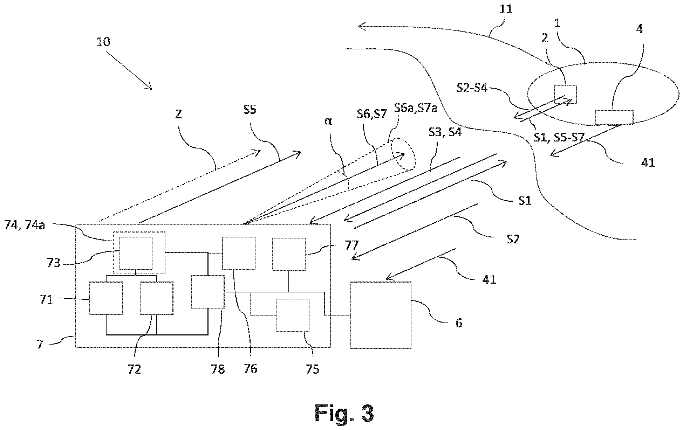

Fig. 3 zeigt eine schematische Darstellung eines Laserwaffensystems gemäß einem Ausführungsbeispiel der Erfindung.

Das in Fig. 3 gezeigte Laserwaffensystem 10 ist mit einer der in Fig. 1 und 2 gezeigten Gegenmesseinrichtungen 1 kompatibel und damit auch kombinierbar.

Das Laserwaffensystem 10 umfasst eine Laserwaffe 7. Bei einer Laserwaffe handelt es sich um die allgemein übliche Bezeichnung einer Waffe, die einen hochenergetischen Laserstrahl als Wirklaserstrahl S5 emittiert um damit ein Ziel zu bestrahlen und dabei zu zerstören oder zumindest stark zu beschädigen. Es gibt Laserwaffen 7 mit verschiedenem Aufbau und verschiedener Ausstattung, dessen Justage aber grundsätzlich alle mit der erfinderischen Gegenmesseinrichtung 1 korrigiert werden können. Die im Folgenden beschriebene und in Fig. 3 gezeigte Laserwaffe ist somit als beispielhaft anzusehen, mit dem Zweck, die Funktion der Gegenmesseinrichtung 1 zu beschreiben. Insbesondere ist die erfindungsgemäße Gegenmesseinrichtung 1 dazu geeignet und ausgelegt, eine Justage aller Komponenten und aller Kanäle einer Laserwaffe typischer Art zu korrigieren, so dass keine weiteren, insbesondere stationären oder interne Justagemesseinrichtungen notwendig sind.

Die in Fig. 3 gezeigten beispielhaft gezeigte Laserwaffe 7 umfasst eine Wirklasereinrichtung 71 zur Emission eines Wirklaserstrahls S5. Die Wirklasereinrichtung 71 umfasst somit einen Wirklaser, welcher in der Regel ein Hochleistungslaser, vorzugsweise im nahen Infrarotbereich ist. Der Wirklaserstrahl S5 enthält somit typischerweise hochenergetische Strahlung, um mit denen ein Ziel, beispielsweise ein Drohne, durch genügend lange Bestrahlung außer Funktion zu setzen bzw. zu zerstören.

Ferner umfasst die Laserwaffe 7 eine Beleuchtungslasereinrichtung 72 zur Emission eines Beleuchtungslaserstrahls S6. Somit umfasst die Beleuchtungslasereinrichtung 72 einen Beleuchtungslaser, welcher zur Beleuchtung des Ziel vorgesehen ist. Der Beleuchtungslaser emittiert den Beleuchtungslaserstrahl S6 vorzugsweise im sichtbaren Spektralbereich, als zwischen 400 nm und ca. 750 nm Wellenlänge. In einigen Ausführungsbeispielen emittiert der Beleuchtungslaser jedoch im nahen infraroten Bereich.

Ferner umfasst die Laserwaffe 7 ein optisches System 73, welches dazu eingerichtet ist, den Wirklaserstrahl S5 aufzunehmen, zu überlagern zu fokussieren und durch eine Apertur zu emittieren. In weiteren Ausführungsformen sind der Wirklaserstrahl S5 nicht überlagert und werden nicht über die gleiche, sondern über getrennte Aperturen bzw. Teleskope ausgegeben.

Die Laserwaffe 7 weist außerdem eine Nachführungseinrichtung 74 auf, welche dazu ausgebildet ist, das optische System 73 auf eine vorbestimmte Richtung Z zu richten. Die Nachführungseinrichtung 74 ist in dieser Ausführungsform als Grobnachführung ausgebildet. Weiterhin ist eine Feinnachführungseinrichtung 74a vorgesehen, die ebenfalls das optische System 73 auf eine vorbestimmte Richtung Z in Richtung des Ziels zu richten. Im Vergleich zur Grobnachführungseinrichtung 74 ist die Feinnachführungseinrichtung 74a dabei für die Nachführung der optischen Achse des optischen Systems über einen kleineren Winkelbereich, dafür aber mit höherer Genauigkeit zuständig.

Die Laserwaffe 7 umfasst ein Radarsystem 75. Das Radarsystem 75 ist dazu ausgelegt, durch Aussendung und Empfangen von Radarwellen mögliche Ziele zu detektieren und deren Position relativ zu Laserwaffe zu bestimmen. Die Radarwellen sind in Fig. 3 als erstes Signal S1 eingezeichnet.

Die Laserwaffe 7 weist ferner eine Entfernungsmesseinrichtung 76 auf. Die Entfernungsmesseinrichtung 76 ist dazu ausgebildet, eine Entfernung zu einem Ziel in der vorbestimmten Richtung zu bestimmen.

Die Laserwaffe 7 umfasst weiterhin eine Sensoreinrichtung 77, welche dazu ausgebildet ist, eintreffende elektromagnetische Strahlung zu detektieren. Die betrifft insbesondere elektromagnetische Strahlung, welche aus Richtung der Gegenmesseinrichtung 1 auf die Laserwaffe 7 eintrifft.

Die Laserwaffe 7 ist in einem Justagemodus und dabei auf eine Gegenmesseinrichtung 1 zur Bestimmung von Justagefehlern einer Laserwaffe 7 gerichtet, wobei die Gegenmesseinrichtung 1 gemäß den weiter oben beschriebenen Gegenmesseinrichtungen 1 der Fig. 1 und insbesondere 2 entspricht.

Die Laserwaffe 7 umfasst außerdem eine Steuerungseinrichtung 78, welche dazu eingerichtet ist, die Nachführungseinrichtung 74 anzusteuern, um den Wirklaserstrahl S5 und den Beleuchtungslaserstrahl S6 auf ein Ziel in der vorbestimmten Richtung zu richten. Weiterhin ist die Steuerungseinrichtung 78 mit den anderen Komponenten, d.h. mit dem Radarsystem 75, der Wirklasereinrichtung 71, der Beleuchtungslasereinrichtung 72, der Entfernungsmesseinrichtung 76, der Sensoreinrichtung 77 sowie mit der Feinnachführungseinrichtung 74a kommunikativ verbunden, um sie entsprechend ihrer Funktion anzusteuern.

Ferner ist eine Empfangseinheit 6 zu erkennen, welche kommunikativ mit der Kommunikationsschnittstelle 4 der Gegenmesseinrichtung 1 und mit der Laserwaffe 7 kommunikativ verbunden ist. Die Empfangseinheit 6 ist dazu ausgebildet ist, die von der Gegenmesseinrichtung 1 gesendeten Messdaten zur aktuellen Position der Gegenmesseinrichtung 1 zu empfangen. In seiner einfachsten Form ist die Empfangseinheit 6 lediglich dazu ausgebildet, den Datenlink 41 zu empfangen und die Messdaten an die Laserwaffe 7, insbesondere an die Steuerungseinrichtung 78, weiterzuleiten. In der Praxis ist der Datenlink 41 bidirektional ausgebildet. In weiteren Ausführungsformen ist die Empfangseinrichtung 6 in die Laserwaffe 7 integriert. Diese kann dabei beispielsweise als ein Teil der Sensoreinrichtung 77 ausgestaltet sein.

In diesem Ausführungsbeispiel ist das erste Signal S1 somit ein Radarsignal S1. Ein Teil der emittierten Radarwellen treffen auf den Retroreflektor 22 der Gegenmesseinrichtung 1, um als Antwortsignal S2 zur Laserwaffe 7 zurück reflektiert zu werden. Somit kann die Position der Gegenmesseinrichtung 1 als erste Messposition aus dem Antwortsignal S2 bestimmt werden, und eine erste Komponente, die eine Ausrichtungseinrichtung des Radarsystems 75 ist, gemäß einem Justagefehler der ersten Komponente aus der Differenz einer Referenzposition, die vornehmlich über den Datenlink 41 von der Gegenmesseinrichtung empfangen wurde, nach zu justieren, also eine Justage zu korrigieren.

Das von der Gegenmesseinrichtung 1 emittierte erste Leuchtsignal S3 eines ersten Spektralbereichs wird mit einer ersten Kamera (nicht gezeigt) der Nachführungseinrichtung 74 detektiert. Daraus wird eine zweite Messposition der Gegenmesseinrichtung 1 auf Basis eines von der ersten Kamera aufgenommenen Bildes des ersten Leuchtsignals S3 bestimmt. Aus einer Differenz der zweiten Messposition und der ersten Messposition wird dann ein entsprechende Justagefehler der Nachführungseinrichtung 74 bestimmt und an die Steuerungseinrichtung 78 zur Anpassung der Steuerung der Nachführungseinrichtung 74 übermittelt.

Analog dazu wird das zweite Leuchtsignal S4 eines zweiten Spektralbereichs von der Gegenmesseinrichtung 1 mit einer zweiten Kamera einer Feinnachführungseinrichtung 74a empfangen. Eine dritte Messposition der Gegenmesseinrichtung 1 wird dann auf Basis eines von der zweiten Kamera aufgenommenen Bildes des zweiten Leuchtsignals bestimmt, sodass ein Justagefehler der Feinnachführungseinrichtung 74a auf Basis einer Differenz der dritten Messposition und der zweiten Messposition bestimmt wird. Dieses dritte Justagesignal wird dann an die Steuerungseinrichtung 78 zur Anpassung der Steuerung der Feinnachführungseinrichtung 74a übermittelt.

Von der Wirklasereinrichtung 71 wird ein Wirklaserstrahls S5 in Richtung der Gegenmesseinrichtung 1 ausgegeben. Eine ersten Intensitätsverteilung des Wirklaserstrahls S5 wird mit einer optischen Flächensensoreinrichtung 21 auf der Gegenmesseinrichtung 1 detektiert. Daraus lässt sich ein Schwerpunkt der ersten Intensitätsverteilung des Wirklasers auf Basis der detektierten ersten Intensitätsverteilung berechnen. Für diesen Fall kann ein Flächendetektor vorgesehen sein, der beispielsweise auch als Quadrant-Diode ausgebildet sein kann.

Eine vierte Messposition der Gegenmesseinrichtung 1, d.h. in diesem Fall des Wirklaserstrahlspots S5a auf der Gegenmesseinrichtung 1, wird dann auf Basis des ermittelten ersten Schwerpunkts der ersten Intensitätsverteilung ermittelt. Daraus wird ein Justagefehler der Wirklasereinrichtung 71 auf Basis einer Differenz der vierten Messposition und der dritten Messposition bestimmt. Dies wird dann ebenfalls an die Steuerungseinrichtung 78 zur Anpassung der Ausrichtung des Wirklasers oder des optischen Systems 73 genutzt.

Darüber hinaus wird auch die Fokusposition des Wirklaserstrahls S5 verändert. Wie weitere oben bereits beschreiben, kann das Verändern des Fokus des Wirklasers beispielsweise durch Variation der Position einer Linse oder eines Spiegels im Strahlengang des Wirklasers innerhalb der Laserwaffe auf der optischen Achse geschehen. Eine andere Möglichkeit besteht durch eine Veränderung einer Krümmung eines deformierbaren Spiegels im Strahlengang des Wirklasers.

Eine Mehrzahl an zweiten Intensitätsverteilungen wird dann mit der optischen Flächensensoreinrichtung 21 auf der Gegenmesseinrichtung 1 ermittelt. Mit diesen lassen sich ein Durchmesser eines Wirklaserstrahlspots S5a auf Basis der erfassten zweiten Intensitätsverteilungen für verschiedene Fokuspositionen bestimmen. Daraus wiederum wird ein Justagefehler des Fokus des Wirklaserstrahls S5 auf Basis des bestimmten Durchmessers des Wirklaserstrahlspots bestimmt und an die Steuerungseinrichtung 78 übermittelt.

Ein von einer Beleuchtungslasereinrichtung 72 ausgegebenes Beleuchtungslaserstrahls S6 wird in Richtung der Gegenmesseinrichtung 1 emittiert. Der Beleuchtungslaserstrahl S6 wird dabei in unterschiedliche Winkel innerhalb eines vorbestimmten Raumwinkels α um die vorbestimmte Richtung Z emittiert, wobei die vorbestimmte Richtung Z in Bezug auf Fig. 3 auf die Gegenmesseinrichtung 1 zeigt. Dort wird eine dritte Intensitätsverteilung des Beleuchtungslaserstrahls S6 mit einem ersten Fotodetektor 251 einer Fotodetektoreinrichtung 25 auf der Gegenmesseinrichtung 1 detektiert. Durch die zeitlich veränderte aktuelle Position der Gegenmesseinrichtung 1 wird auf Basis der von dem ersten Fotodetektor 251 der Fotodetektoreinrichtung 25 ausgelesenen ermittelten Signalstärke und dem Raumwinkel α eine dritte Intensitätsverteilung des Entfernungsmessstrahls bestimmt. So kann eine Auswerteeinheit 51, welche sich an Bord der Gegenmesseinrichtung 1, beispielsweise in der Steuereinheit 5, oder der Empfangseinheit 6 befindet, die dritten Intensitätswerte auf einen Strahlparameter, wie beispielsweise einem Durchmesser und/oder Position eines Lichtkegels S6a der Strahlung, wie er in Fig. 3 lediglich auf der Emissionsseite der Laserwaffe 7 angedeutet ist, auswerten. Auf Basis der dritten Intensitätsverteilung wird ein Justagefehler der Beleuchtungslasereinrichtung 72 bestimmt. In weiteren Ausführungsformen wird der Justagefehler der Beleuchtungslasereinrichtung 72 dann an die Steuerungsvorrichtung 78 übermittelt um damit die Ausrichtung der Beleuchtungslaserstrahls S6 anzupassen.

Ferner emittiert die Entfernungsmesseinrichtung 76 einen Entfernungsmesslaserstrahl S7. Dieser Entfernungsmesslaserstrahl S7 wird dabei in unterschiedliche Winkel innerhalb eines vorbestimmten Raumwinkels α um die vorbestimmte Richtung Z emittiert, wobei die vorbestimmte Richtung Z in Bezug auf Fig. 3 auf die Gegenmesseinrichtung 1 zeigt. Ein entsprechendes optischen Signal des Entfernungsmesslaserstrahls S7 wird mit einem zweiten Fotodetektor 252 der Fotodetektoreinrichtung 25 auf der Gegenmesseinrichtung 1 detektiert. In bestimmten Ausführungsformen enthält die Fotodetektoreinrichtung 25 lediglich einen Fotodetektor zur Detektion des Entfernungsmesslaserstrahls S7 und des Beleuchtungslaserstrahls S6. Durch die zeitlich veränderte aktuelle Position der Gegenmesseinrichtung 1 wird auf Basis der vom zweiten Fotodetektor 252 der Fotodetektoreinrichtung 25 ausgelesenen ermittelten Signalstärke und dem Raumwinkel α eine vierte Intensitätsverteilung des Entfernungsmessstrahls bestimmt. So kann eine Auswerteeinheit 51, welche sich an Bord der Gegenmesseinrichtung 1, beispielsweise in der Steuereinheit 5, oder der Empfangseinheit 6 befindet, die vierten Intensitätswerte auf einen Strahlparameter, wie beispielsweise einem Durchmesser und/oder Position eines Lichtkegels S7a der Strahlung, wie er in Fig. 3 lediglich auf der Emissionsseite der Laserwaffe 7 angedeutet ist, auswerten. Nach dessen Bestimmung kann ein siebtes Justagesignal für die Entfernungsmesseinrichtung 76 auf Basis der ermittelten vierte Intensitätsverteilung bestimmt werden. Diese kann dann an die Steuerungseinrichtung 78 zu Anpassung einer Ausrichtung des Entfernungsmesslaserstrahl S7 übermittelt werden. Auf dieser Basis kann also die Ausrichtung des Entfernungsmesslasers der Entfernungsmesseinrichtung 76 nachjustiert werden. Die Lichtkegel S6a und S7a des Beleuchtungslaserstrahls S6 und des Entfernungsmesslaserstrahls S7 sind in Fig. 3 überlagert und mit gleichem Raumwinkel α eingezeichnet. Es versteht sich, dass in weiteren Ausführungsformen der Beleuchtungslaserstrahl S6 und der Entfernungsmesslaserstrahl S7 nicht überlagert werden und/oder mit unterschiedlichem Raumwinkel α ausgesendet werden.

Für die oben beschriebene Korrektur der Justage der einzelnen Komponenten ist es in dieser Ausführungsform vorgesehen, die Gegenmesseinrichtung 1 auf einer vorbestimmten Flugbahn 11 zu steuern, auf welcher Flugbahn 11 die Gegenmesseinrichtung 1 zu der Laserwaffe 7 unterschiedliche Entfernungen aufweist. Weiterhin spannt die Gegenmesseinrichtung 1 mit der Laserwaffe 7 unterschiedliche Azimutalwinkel und Elevationswinkel auf, so dass in Abhängigkeit der Entfernung, des Azimutal- und Elevationswinkels Justageprozesse vorgenommen werden. Azimutalwinkel und Elevationswinkel sind im herkömmlichen Sinne zu verstehen, d.h. der Azimutalwinkel oder Horizontalwinkel wird durch eine horizontale Drehung der Laserwaffe oder des entsprechenden Richtturms, beispielsweise durch die Nachführungseinrichtung 74, bestimmt, und der Elevationswinkel, Vertikalwinkel oder Höhenwinkel durch eine Ausrichtung in vertikaler Richtung.

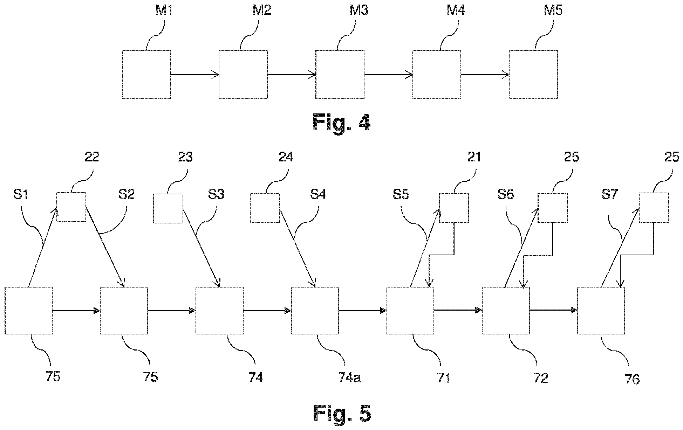

Fig. 4 zeigt eine schematische Darstellung eines Verfahrens zur Korrektur einer Justage einer Laserwaffe gemäß einem Ausführungsbeispiel der Erfindung.

In dem Verfahren zur Korrektur einer Justage einer Laserwaffe 7 wird zunächst eines ersten Signals S1 in eine vorbestimmte Richtung Z zu einer Gegenmesseinrichtung 1 zur Bestimmung von Justagefehlern der Laserwaffe 7 emittiert M1. In bevorzugten Ausführungsformen ist die Gegenmesseinrichtung 1 gemäß der zuvor in Bezug auf Fig. 1 bis 3 beschriebenen Gegenmesseinrichtung 1 zur Bestimmung von Justagefehlern ausgebildet. Die Gegenmesseinrichtung 1 ist dabei, wie oben beschrieben, als fliegende Plattform ausgebildet. Ein erstes Antwortsignal S2 wird aus der vorbestimmten Richtung empfangen M2. Ferner wird eine Referenzposition der Gegenmesseinrichtung 1 empfangen M3. Die Referenzposition kann typischerweise aus einem GPS-Signal der Gegenmesseinrichtung 1 herausgelesen werden, ist aber nicht auf dieses begrenz. Die Referenzposition wird an die Empfangseinheit 6, welche kommunikativ mit der Laserwaffe 7 verbunden ist, mittels des Datenlinks 41 übermittelt.

In weiteren Ausführungsbeispielen beinhaltet die Referenzposition eine Richtungsangabe der Gegenmesseinrichtung 1 und eine Entfernungsangabe der Gegenmesseinrichtung 1 von der Laserwaffe 7, welche das erste Signal S1 emittiert. Ferner ist vorgesehen, dass eine erste Messposition aus dem ersten Antwortsignal bestimmt wird M4. Auf Basis einer Differenz der Referenzposition und der ersten Messposition wir nun ein Justagefehler einer ersten Komponente der Laserwaffe 7 bestimmt M5. _Der Justagefehler beinhaltet einen Azimut- und Elevationswinkel, womit dieser für eine Steuereinrichtung 78 der Laserwaffe 7 eindeutig angegeben werden kann.

Fig. 5 zeigt eine schematisches Darstellung eines Verfahrens zur Korrektur einer Justage einer Laserwaffe gemäß einem weiteren Ausführungsbeispiel der Erfindung.

Fig. 5 stellt schematisch ein Ausführungsbeispiel des zuletzt beschriebenen Verfahren zur Korrektur einer Justage der Laserwaffe 7 mittels den darin involvierten Komponenten und den entsprechenden Signalen anschaulich dar.

Das erste Signal S1 ist ein Radarsignal S1 und die in Bezug auf Fig. 4 erwähnte erste Komponente ist eine Ausrichtungseinrichtung eines Radarsystems 75. Das erste Signal S1 wird von dem Radarsystem 75 der Laserwaffe 7 auf den Retroreflektor 22 der Referenzeinrichtung 2 der Gegenmesseinrichtung gerichtet, Der Retroreflektor 22 reflektiert das auftreffende erste Signal S1 als erstes Antwortsignal S2 zurück zu dem Radarsystem 75, der das erste Signals S1 gesendet hat. Daraus wird eine erste Messposition der Gegenmesseinrichtung 1 bestimmt, aus dem ein ersten Justagesignal für das Radarsystem 75 der Laserwaffe 7 auf Basis einer Differenz der Referenzposition und der ersten Messposition bestimmt wird.

Als nächstes wird ein erstes Leuchtsignals S3 eines ersten Spektralbereichs von einer ersten Lichtquelle 23 der Referenzeinrichtung 2 der Gegenmesseinrichtung 1 emittiert und mit einer ersten Kamera einer Nachführungseinrichtung 74, welche vorzugsweise als eine Grob-Nachführungseinrichtung 74 ausgebildet ist, detektiert. Aus diesem wird eine zweiten Messposition der Gegenmesseinrichtung 1 auf Basis eines von der ersten Kamera aufgenommenen Bildes des ersten Leuchtsignals bestimmt. Auf Basis einer Differenz der zweiten Messposition und der ersten Messposition wird ein Justagefehler der Nachführungseinrichtung 74 bestimmt.

Analog dazu wird ein zweites Leuchtsignals S4 eines zweiten Spektralbereichs von einer zweiten Lichtquelle 24 der Referenzeinrichtung 2 der Gegenmesseinrichtung 1 emittiert und mit einer zweiten Kamera einer Feinnachführungseinrichtung 74a der Laserwaffe 7 detektiert. Aus diesem wird eine dritten Messposition der Gegenmesseinrichtung 1 auf Basis eines von der zweiten Kamera aufgenommenen Bildes des zweiten Leuchtsignals bestimmt. Auf Basis einer Differenz der dritten Messposition und der zweiten Messposition wird ein Justagefehler der Feinnachführungseinrichtung 74a bestimmt.

Nun wird ein Wirklaserstrahls S5 einer Wirklasereinrichtung 71 in Richtung der Gegenmesseinrichtung 1 ausgegeben und von einer optischen Flächensensoreinrichtung 21 detektiert. Es wird eine ersten Intensitätsverteilung des Wirklaserstrahls S5 mit der optischen Flächensensoreinrichtung 21 der Referenzeinrichtung 2 auf der Gegenmesseinrichtung 1 erfasst, um daraus einen ersten Schwerpunkt der ersten Intensitätsverteilung des Wirklasers auf Basis der detektierten ersten Intensitätsverteilung zu ermitteln. Die Bestimmung wird typischerweise an Board der Gegenmesseinrichtung 1 vorgenommen. Auf Basis des ermittelten ersten Schwerpunkts der ersten Intensitätsverteilung wird nun eine vierte Messposition der Gegenmesseinrichtung 1, genauer gesagt der Position des Wirklaserstrahlspots S5a auf einem Flächendetektor 21a der Flächensensoreinrichtung 21. Auf Basis einer Differenz der vierten Messposition und der dritten Messposition wird ein Justagefehler der Wirklasereinrichtung 71 bestimmt.

Ferner wird noch eine Fokusposition des Wirklaserstrahls S5 verändert. Hier werden gemäß der Modulation zweite Intensitätsverteilungen für verschiedene Fokuspositionen mit der optischen Flächensensoreinrichtung 21 auf der Gegenmesseinrichtung 1 detektiert und ein Durchmessers eines Wirklaserstrahlspots S5a auf Basis der erfassten zweiten Intensitätsverteilungen in Abhängigkeit der Modulation der Fokusposition ermittelt. Auf Basis des bestimmten Durchmessers des Wirklaserstrahlspots S5a wird ein Justagefehler eines Fokus des Wirklaserstrahls S5 bestimmt.

Ferner wird ein Beleuchtungslaserstrahls S6, welches von einem Beleuchtungslaser einer Beleuchtungslasereinrichtung 72 ausgegebenen wird, in unterschiedliche Winkel innerhalb eines vorgegebenen Raumwinkels α um die vorbestimmte Richtung Z, welche auf die Gegenmesseinrichtung 1 zeigt, ausgegeben oder emittiert. Ein optischen Signals des Beleuchtungslaserstrahls S6 wird mit einem ersten Fotodetektor 251 einer Fotodetektoreinrichtung 25 auf der Gegenmesseinrichtung 1 detektiert.

Eine dritte Intensitätsverteilung des Beleuchtungslaserstrahls S6 wird auf Basis der vom Fotodetektoreinrichtung 25 ausgelesenen ermittelten Signalstärke und dem Raumwinkel α ermittelt. Auf Basis der dritten Intensitätsverteilung wird ein Justagefehler der Beleuchtungslasereinrichtung 72 bestimmt.

Ferner wird ein Entfernungsmesslaserstrahl S7 von einem Entfernungsmesslaser einer Entfernungsmesseinrichtung 76 in unterschiedliche Winkel innerhalb eines vorbestimmten Raumwinkels α um die vorbestimmte Richtung Z, welche auf die Gegenmesseinrichtung 1 zeigt, ausgegeben. Ein optischen Signals des Entfernungsmesslaserstrahls S7 wird mit einem zweiten Fotodetektor 252 der Fotodetektoreinrichtung 25 der Signalgebeeinheit 2 auf der Gegenmesseinrichtung 1 detektiert. Auf Basis der vom zweiten Fotodetektor 252 ausgelesenen ermittelten Signalstärke und dem Raumwinkel α wird eine vierte Intensitätsverteilung ermittelt. Auf Basis der ermittelten vierten Intensitätsverteilung wird ein Justagefehler der Entfernungsmesseinrichtung 76 bestimmt.

### BEZUGSZEICHENLISTE

- 1: Gegenmesseinrichtung
- 2: Referenzeinrichtung
- 3: Positionsbestimmungseinrichtung
- 4: Kommunikationsschnittstelle
- 5: Steuereinrichtung
- 6: Empfangseinheit
- 7: Laserwaffe
- 10: Laserwaffensystem
- 11: vorgegebenen Flugbahn
- 21: Flächensensoreinrichtung
- 21a: Flächendetektor
- 22: Retroreflektor
- 23: erste Lichtquelle
- 24: zweite Lichtquelle
- 25: Fotodetektoreinrichtung
- 251: erster Fotodetektor (für den Beleuchtungslaser)
- 252: zweiter Fotodetektor (für den Entfernungsmesslaser)
- 41: Datenlink
- 51: Auswerteeinheit
- 71: Wirklasereinrichtung
- 72: Beleuchtungslasereinrichtung
- 73: optisches System
- 74: (Grob-)Nachführungseinrichtung
- 75: Radarsystem
- 76: Entfernungsmesseinrichtung
- 77: Sensoreinrichtung
- 78: Steuerungseinrichtung
- M1-M5: Verfahrensschritte
- S1: erstes Signal
- S2: Antwortsignal
- S3: erstes Leuchtsignal
- S4: zweites Leuchtsignal
- S5: Wirklaserstrahl
- S5a: Wirklaserstrahlspot
- S6: Beleuchtungslaserstrahl
- S6a: (Emissions-)Kegel des Beleuchtungslasers
- S7: Entfernungsmesslaserstrahl
- S7a: (Emissions-)Kegel des Entfernungsmesslasers
- Z: vorbestimmte Richtung
- α: Raumwinkel

## Patentansprüche

1. Gegenmesseinrichtung (1) zur Bestimmung von Justagefehlern einer Laserwaffe (7),
mit einer Referenzeinrichtung (2), welche dazu ausgebildet ist, elektromagnetische Strahlung:
von einer vorbestimmten Richtung (Z) eintreffend zu detektieren und/oder zurück entgegengesetzt der vorbestimmten Richtung (Z) zu reflektieren,
und/oder
entgegengesetzt der vorbestimmten Richtung (Z) zu emittieren, mit einer Positionsbestimmungseinrichtung (3), welche dazu eingerichtet ist, eine aktuelle Position relativ zur Laserwaffe (7) zu bestimmen,
mit einer Kommunikationsschnittstelle (4) zur Kommunikation mit einer Empfangseinheit (6) über einen Datenlink (41), und
mit einer Steuereinrichtung (5), welche mit der Referenzeinrichtung (2), der Positionsbestimmungseinrichtung (3) und der Kommunikationsschnittstelle (4) kommunikativ verbunden ist, und welche dazu eingerichtet ist, die aktuelle Position von der Positionsbestimmungseinrichtung (3) auszulesen,
und entsprechende Messdaten zur aktuellen Position über den Datenlink (41) zu der Empfangseinheit (6) zu senden,
wobei die Messvorrichtung (1) als fliegende Plattform ausgebildet ist.

2. Gegenmesseinrichtung (1) nach Anspruch 1, wobei die Referenzeinrichtung (2) eine optische Flächensensoreinrichtung (21) aufweist, welche einen Flächendetektor aufweist, und dazu ausgebildet ist, eine Intensitätsverteilung der auf den Flächendetektor auftreffenden optischen Strahlung, insbesondere der eines Wirklasers der Laserwaffe (7), zu detektieren,
wobei die Steuereinrichtung (5) dazu ausgebildet ist, die detektierte Intensitätsverteilung und/oder daraus berechnete Größen über den Datenlink (41) an die Empfangseinheit (6) zu senden.

3. Gegenmesseinrichtung (1) nach einem der vorstehenden Ansprüche, wobei die Referenzeinrichtung (2) einen Retroreflektor (22) für Radarwellen aufweist, welcher dazu geeignet ist, von der vorbestimmten Richtung (Z) auftreffenden Radarwellen entgegengesetzt der vorbestimmten Richtung (Z) zurück zu reflektieren.

4. Gegenmesseinrichtung nach einem der vorstehenden Ansprüche, wobei die Referenzeinrichtung (2) eine Mehrzahl von Lichtquellen (23, 24) aufweist, welche dazu ausgebildet sind, Leuchtsignale (S3, S4) in unterschiedlichen spektralen Bereichen auszusenden, wobei die unterschiedlichen spektralen Bereiche insbesondere zur Detektion bildgebender Sensoreinrichtungen der Laserwaffe (7) ausgewählt sind, und bevorzugt den sichtbaren Bereich, sowie den nahen und mittleren Infrarot-Bereich umfassen.

5. Gegenmesseinrichtung (1) nach einem der vorstehenden Ansprüche, wobei die Referenzeinrichtung (2) eine erste Lichtquelle (23) aufweist, welche dazu ausgebildet ist, ein erstes Leuchtsignal (S3) in einem ersten, vorzugsweise nahen und/oder mittleren infraroten, spektralen Bereich, entgegengesetzt der vorbestimmten Richtung (Z) zu emittieren,
wobei die Referenzeinrichtung (2) insbesondere eine zweite Lichtquelle (24) aufweist, welche dazu ausgebildet ist, ein zweites Leuchtsignal (S4) in einem von dem ersten spektralen Bereich verschiedenen zweiten, vorzugsweise sichtbaren und/oder infrarotem, spektralen Bereich, entgegengesetzt der vorbestimmten Richtung (Z) zu emittieren.

6. Gegenmesseinrichtung (1) nach einem der vorstehenden Ansprüche, wobei die Referenzeinrichtung (2) einer für einen dritten Spektralbereich sensitiven Fotodetektoreinrichtung (25) aufweist,
wobei die Steuereinrichtung (5) dazu ausgebildet ist, von der Fotodetektoreinrichtung (25) ausgegebene dritte Signalwerte über den Datenlink (41) an die Empfangseinheit (6) zu senden, wobei die Steuereinrichtung (5) insbesondere eine Auswerteeinheit (51) aufweist, welche dazu ausgebildet ist, zumindest einen Strahlparameter aus einer Mehrzahl von dritten Signalwerten in Abhängigkeit der aktuellen Position zu ermitteln und den zumindest einen Strahlparameter mittels des Datenlinks (41) zur Empfangseinheit (6) zu senden; und/oder
wobei die Positionsbestimmungseinrichtung (3) dazu ausgebildet ist, die aktuelle Position aus einem GPS-Signal zu ermitteln, welches von der Positionsbestimmungseinrichtung (3) empfangen wird.

7. Laserwaffensystem (10),
mit einer Laserwaffe (7), wobei die Laserwaffe (7) insbesondere umfasst:
eine Wirklasereinrichtung (71) zur Emission eines Wirklaserstrahls (S5),
eine Beleuchtungslasereinrichtung (72) zur Emission eines Beleuchtungslaserstrahls (S6),
ein optisches System (73), welches dazu eingerichtet ist, den Wirklaserstrahl (S5) und den Beleuchtungslaserstrahl (S6) aufzunehmen, zu überlagern, zu fokussieren und durch eine Apertur zu emittieren,
eine Nachführungseinrichtung (74), welche dazu ausgebildet ist, das optische System (73) auf eine vorbestimmte Richtung (Z) zu richten,
ein Radarsystem (75), welches dazu ausgelegt ist, durch Aussendung und Empfangen von Radarwellen mögliche Ziele zu detektieren und deren Position relativ zur Laserwaffe (7) zu bestimmen,
eine Entfernungsmesseinrichtung (76), welche dazu ausgebildet ist, eine Entfernung zu einem Ziel in der vorbestimmten Richtung (Z) zu bestimmen,
eine Sensoreinrichtung (77), welche dazu ausgebildet ist, eintreffende elektromagnetische Strahlung zu detektieren,
mit der Messvorrichtung (1) zur Bestimmung von Justagefehlern einer Laserwaffe (7) gemäß den Ansprüchen 1 bis 6,
mit einer Empfangseinheit (6), welche kommunikativ mit der Kommunikationsschnittstelle (4) der Messvorrichtung (1) verbunden ist,
wobei die Empfangseinheit (6) mit der Laserwaffe (7) kommunikativ verbunden ist, und dazu ausgebildet ist, die von der Gegenmesseinrichtung (1) gesendeten Messdaten zu empfangen,
mit einer Steuerungseinrichtung (78), welche dazu eingerichtet ist, die Nachführungseinrichtung (74) anzusteuern, um den Wirklaserstrahl (S5) und den Beleuchtungslaserstrahls auf ein Ziel in der vorbestimmten Richtung (Z) zu richten, und basierend auf den Messdaten eine Justage der Laserwaffe (7) zu korrigieren.

8. Verfahren zur Korrektur einer Justage einer Laserwaffe (7), umfassend:
Emittieren (M1) eines ersten Signals (S1) in eine vorbestimmte Richtung (Z) zu einer Gegenmesseinrichtung (1) zur Bestimmung von Justagefehlern der Laserwaffe (7), wobei die Messvorrichtung (1) als fliegende Plattform ausgebildet ist,
Empfangen (M2) eines ersten Antwortsignals (S2) aus der vorbestimmten Richtung (Z),
Ermitteln (M3) einer Referenzposition der Gegenmesseinrichtung (1), Bestimmen (M4) einer ersten Messposition aus dem ersten Antwortsignal, und
Bestimmen (M5) eines Justagefehlers einer ersten Komponente der Laserwaffe (7) auf Basis einer Differenz der Referenzposition und der ersten Messposition, wobei der Justagefehler einen Azimut- und Elevationswinkels beinhaltet.

9. Verfahren nach Anspruch 8, wobei die Referenzposition eine Richtungsangabe der Gegenmesseinrichtung (1) und eine Entfernungsangabe der Gegenmesseinrichtung (1) von der Laserwaffe (7) beinhaltet, welche das erste Signal (S1) emittiert; und/oder
wobei die Referenzposition aus einem GPS-Signal der Gegenmesseinrichtung (1) herausgelesen wird und an eine Empfangseinheit (6), welche kommunikativ mit der Laserwaffe (7) verbunden ist, übermittelt wird; und/oder
wobei das erste Signal (S1) ein Radarsignal (S1) und die erste Komponente eine Ausrichtungseinrichtung eines Radarsystems (75) ist, wobei die Gegenmesseinrichtung (1) einen Retroreflektor (22) aufweist, welcher das auf die Gegenmesseinrichtung (1) auftreffende erste Signal als erstes Antwortsignal (S2) zurück zu einem Emitter des ersten Signals (S1) sendet.

10. Verfahren nach Anspruch 8 oder 9, ferner umfassend:
Empfangen eines ersten Leuchtsignals (S3) eines ersten Spektralbereichs von der Gegenmesseinrichtung (1) mit einer ersten Kamera einer Nachführungseinrichtung (74),
Bestimmen einer zweiten Messposition der Messvorrichtung (1) auf Basis eines von der ersten Kamera aufgenommenen Bildes des ersten Leuchtsignals, und
Bestimmen eines Justagefehlers der Nachführungseinrichtung (74) auf Basis einer Differenz der zweiten Messposition und der ersten Messposition.

11. Verfahren nach Anspruch 10, ferner umfassend:
Empfangen eines zweiten Leuchtsignals (S4) eines zweiten Spektralbereichs von der Gegenmesseinrichtung (1) mit einer zweiten Kamera einer Feinnachführungseinrichtung (74a),
Bestimmen einer dritten Messposition der Gegenmesseinrichtung (1) auf Basis eines von der zweiten Kamera aufgenommenen Bildes des zweiten Leuchtsignals, und
Bestimmen eines Justagefehlers der Feinnachführungseinrichtung (74a) auf Basis einer Differenz der dritten Messposition und der zweiten Messposition.

12. Verfahren nach Anspruch 11, ferner umfassend:
Emittieren eines von einer Wirklasereinrichtung (71) ausgegebenen Wirklaserstrahls (S5) in Richtung der Messvorrichtung (1),
Detektieren einer ersten Intensitätsverteilung des Wirklaserstrahls (S5) mit einer optischen Flächensensoreinrichtung (21) auf der Gegenmesseinrichtung (1),
Ermitteln eines ersten Schwerpunkts der ersten Intensitätsverteilung des Wirklasers auf Basis der detektierten ersten Intensitätsverteilung, Bestimmen einer vierten Messposition der Gegenmesseinrichtung (1) auf Basis des ermittelten ersten Schwerpunkts der ersten Intensitätsverteilung, und
Bestimmen eines Justagefehlers der Wirklasereinrichtung (71) auf Basis einer Differenz der vierten Messposition und der dritten Messposition;
wobei das Verfahren insbesondere ferner umfasst:
Verändern einer Fokusposition des Wirklaserstrahls (S5),
Ermitteln von zweiten Intensitätsverteilung für verschiedene Fokuspositionen mit der optischen Flächensensoreinrichtung (21) auf der Gegenmesseinrichtung (1),
Ermitteln eines Durchmessers eines Wirklaserstrahlspots (S5a) auf Basis der erfassten zweiten Intensitätsverteilung in Abhängigkeit der Veränderung der Fokusposition, und
Bestimmen eines Justagefehlers eines Fokus des Wirklaserstrahls (S5) auf Basis des bestimmten Durchmessers des Wirklaserstrahlspots.

13. Verfahren nach einem der Ansprüche 8 bis 12, ferner umfassend Emittieren eines von einer Beleuchtungslasereinrichtung (72) ausgegebenen Beleuchtungslaserstrahls (S6) in unterschiedliche Winkel innerhalb eines vorgegebenen Raumwinkels (α) um die vorbestimmte Richtung (Z), welche auf die Gegenmesseinrichtung (1) zeigt,
Detektieren eines optischen Signals des Beleuchtungslaserstrahls (S7) mit einer Fotodetektoreinrichtung (25) auf der Gegenmesseinrichtung (1), Ermitteln einer dritten Intensitätsverteilung auf Basis der von der Fotodetektoreinrichtung (25) ausgelesenen ermittelten Signalstärke und dem Raumwinkel (α), und
Bestimmen eines Justagefehlers der Beleuchtungslasereinrichtung (72) auf Basis der dritten Intensitätsverteilung.

14. Verfahren nach einem der Ansprüche 10 bis 13, ferner umfassend:
Emittieren eines von einer Entfernungsmesseinrichtung (76) ausgegeben Entfernungsmesslaserstrahls (S7) in unterschiedliche Winkel innerhalb eines vorgegebenen Raumwinkels (α) um die vorbestimmte Richtung (Z), welche auf die Gegenmesseinrichtung (1) zeigt,
Detektieren eines optischen Signals des Entfernungsmesslaserstrahls (S7) mit einer Fotodetektoreinrichtung (25) auf der Gegenmesseinrichtung (1),
Ermitteln einer vierten Intensitätsverteilung auf Basis der von der Fotodetektoreinrichtung (25) ausgelesenen ermittelten Signalstärke und dem Raumwinkel (α), und
Bestimmen eines Justagefehlers der Entfernungsmesseinrichtung (76) auf Basis der ermittelten vierten Intensitätsverteilung.

15. Verfahren nach einem der Ansprüche 10 bis 14, ferner umfassend:
Steuern der Gegenmesseinrichtung (1) auf einer vorbestimmten Flugbahn (11), auf welcher die Gegenmesseinrichtung (1) zu der Laserwaffe (7), welche das erste Signal (S1) emittiert, unterschiedliche Entfernungen aufweist, und auf welcher die Gegenmesseinrichtung (1) mit der Laserwaffe (7) unterschiedliche Azimutalwinkel und Elevationswinkel aufspannt.
